# EUROPEAN PATENT SPECIFICATION

(11) **EP 0 478 118 B1**
(45) Date of publication and mention of the grant of the patent: **29.12.1993**
(21) Application number: 91306529.8
(22) Date of filing: 18.07.1991
(51) Int. Cl.: A23L 3/36

(54) **Apparatus for producing frozen particles**
Herstellungseinrichtung eines gefrorenen Granulates
Appareil de fabrication de particules congelées

(30) Priority: 31.08.1990 JP 92088/90
(43) Date of publication of application: 01.04.1992
(73) Proprietor: TAIYO SANSO CO., LTD., Nishi-ku, Osaka (JP)
(72) Inventor: Tada, Masuo, Yao-shi, Osaka-fu (JP); Mugurama, Jun, Taiyo Sanso Co., Ltd., Matsubara-shi, Osaka-fu (JP); Hirakata, Shosuke, Amagasaki-shi, Hyogo-ken (JP); Tomariguchi, Masanori, Taiyo Sanso Co., Ltd., Matsubara-shi, Osaka-fu (JP)
(74) Representative: Smith, Norman Ian

(56) References cited:
- EP-A- 0 225 081
- BE-A- 559 605
- FR-A- 1 490 517
- FR-A- 1 507 738
- FR-A- 2 165 731
- FR-A- 2 203 591
- FR-A- 2 375 901
- FR-A- 2 402 421
- NL-A- 6 501 977
- NL-A- 6 814 641

## Description

The present invention relates to an apparatus for producing particles such as microfine particles useful in such applications as processing foods, pharmaceuticals, and semiconductors.

A conventional apparatus for producing microfine frozen particles is described in Japanese Utility Model Laid-open No. 1-88365 (Heisei).

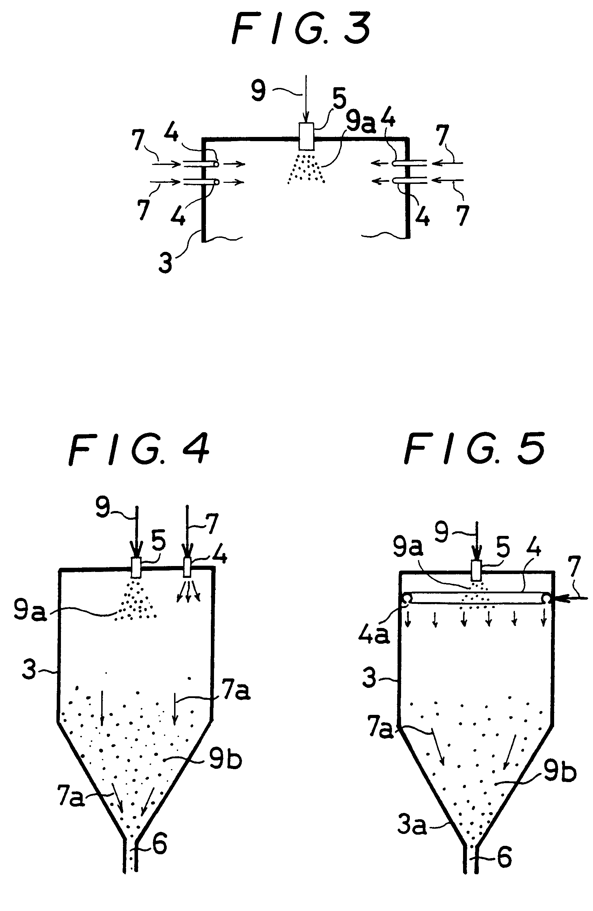

As illustrated in Figs. 4 or 5, the apparatus of the above-mentioned application has at the upper portion of a refrigerant vessel 3, an atomizer 4 for spraying a refrigerant 7 such as liquified nitrogen and an atomizer 5 for spraying a material 9 to be frozen, and further comprises at the bottom of the vessel 3 a frozen particle outlet 6 which also serves as a frozen particle outlet. In the apparatus of Fig. 4 (referred to as "the first conventional apparatus" hereinafter), the refrigerant 7 is designed to be sprayed downwardly from a single location. In the apparatus of Fig. 5 (referred to as "the second conventional apparatus" hereinafter), a ring-shaped atomizer 4 having a plurality of spray nozzles 4a is used to spray the refrigerant 7 downwardly from a multiplicity of locations.

In either of the above-mentioned apparatuses, when the refrigerant 7 is sprayed out of the atomizer 4, the internal condition of the vessel 3 is maintained in a cool gaseous phase by the vaporized gas 7a of the refrigerant 7. The refrigerant gas 7a is discharged through the outlet 6, and a downward stream of the refrigerant gas 7a to the outlet 6 is formed in the vessel 3. When the material 9 to be frozen is sprayed out of the atomizer 5, the sprayed particles 9a of the material 9 is frozen through thermal exchange with the refrigerant gas 7a as they fall to thereby form frozen particles 9b. The frozen particles 9b move downward in the stream of the refrigerant gas 7a, and are then ejected from the vessel 3 through the outlet 6.

Although either of the above-mentioned apparatus can achieve a high efficienty in recovering the frozen particles and a stability in collecting the frozen particles, there are still a lot of problems to be resolved and therefore a further improvement is desired in such apparatus.

In the first conventional apparatus, since the refrigerant 7 is sprayed from one location, the stream of the refrigerant gas 7a tends to be partial inside the vessel 3 to possibly cause non-uniform hardness of the resulting frozen particles 9b. Furthermore, the refrigerant 7 which is sprayed tends to concentrate on to a single portion; therefore the refrigerant 7 is sometimes discharged through the outlet 6 as insufficiently vaporized, and as a consequence the internal condition of the vessel 3 can be hardly maintainted in a sufficiently cool gaseous phase.

In the second conventional apparatus, the refrigerant gas 7a forms a uniform downward stream in the entire lateral section of the vessel 3; therefore the frozen particles 9b are formed downard evenly but easily remain to clog the conical section 3a provided at the bottom of the vessel 3, which means that no smooth discharge of the frozen particles through the outlet 6 can be achieved. In order to prevent the frozen particles 9 from remaining in the conical section, a separate means for preventing the frozen particles 9 from remaining such as by applying vibration to the vessel 3 is required, which also leads to an undesirable bulky and complicated system.

### SUMMARY OF THE INVENTION

Accordingly, it is an object of the present invention to provide an apparatus for producing frozen particles capable of obtaining frozen particles having a uniformed hardness.

Another object of the present invention is to provide an apparatus for producing frozen particles capable of efficiently producing frozen particles without letting sprayed refrigerant to be discharged through a frozen particle outlet without vaporization.

Another object of the present invention is to provide an apparatus for producing frozen particles capable of stably and smoothly taking out frozen particles from the frozen particle outlet by preventing the possibility of the frozen particles from remaining inside the vessel.

A further object of the present invention is to provide an apparatus for producing frozen particles capable of providing a relatively long path for thermal exchange between the refrigerant gas and the particles of the material to be frozen without enlarging the refrigerant vessel to thereby remarkably increase the thermal exchange efficiency and achieve a reduction in the running cost.

The above-mentioned objects can be achieved by providing an apparatus for producing frozen particles comprising: an airtight adiabatic vessel having a lower portion thereof a frozen particle outlet which also serves as a gas outlet; a material atomizer for spraying downwardly a material to be frozen in said vessel; and a plurality of refrigerant atomizers arranged at regular intervals around an annular area surrounding the spray area of said material atomizer at an upper portion of the inside of said vessel in order to spray a refrigerant such as liquified nitrogen in the same generally clockwise or anticlockwise direction which is generally tangential to the annular area of the vessel. The plurality of refrigerant atomizers may be grouped in a plurality of lateral or radial planes of said vessel if required.

Since the refrigerant is sprayed from a plurality of places in the same approximately tangential direction of the above-mentioned annular area surrounding the spray area of the material atomizer, the refrigerant is completely vaporized after being sprayed to maintain the internal condition of the vessel in a cool gaseous phase as well as to form a gas stream which swirls along the internal wall of the vessel to be directed to the frozen particle outlet.

When a material to be frozen is sprayed in the above-mentioned condition, the sprayed material particles are frozen through thermal exchange with the refrigerant gas. Since the refrigerant is sprayed approximately evenly from a plurality of places, frozen particles of excellent quality generally uniform in frozen hardness are produced.

The frozen particles obtained through thermal exchange with the refrigerant are transferred to the frozen particle outlet in a swirling movement in the above-mentioned gas stream. Therefore, even when the vessel has a conical lower section which gradually tapers toward the outlet, the frozen particles are smoothly ejected through the outlet without remaining in or clogging the conical section. Furthermore, since the gas stream swirls along the internal wall of the vessel, the possibility of the frozen particles remaining on the internal wall of the vessel can be effectively prevented.

In addition, since the refrigerant gas forms a swirling stream, as compared with the conventional case where a straight downward refrigerant stream is formed, a relatively long contact path between the refrigerant gas and the material to be frozen can be achieved to remarkably improve the thermal efficiency, which leads to a reduction in the running cost.

The invention will be described now by way of example only, with particular reference to the accompanying drawings. In the drawings:
Fig. 1 is a vertical sectional view of an apparatus for producing frozen particles in accordance with the present invention;
Fig. 2 is a lateral sectional view taken along the line A-A in Fig. 1;
Fig. 3 is a vertical sectional view of the principal part of another embodiment in accordance with the present invention;
Fig. 4 is a vertical sectional view of a first form of prior art apparatus; and,
Fig. 5 is a vertical sectional view of a second form of prior art apparatus.

### DESCRIPTION OF A PREFERRED EMBODIMENT

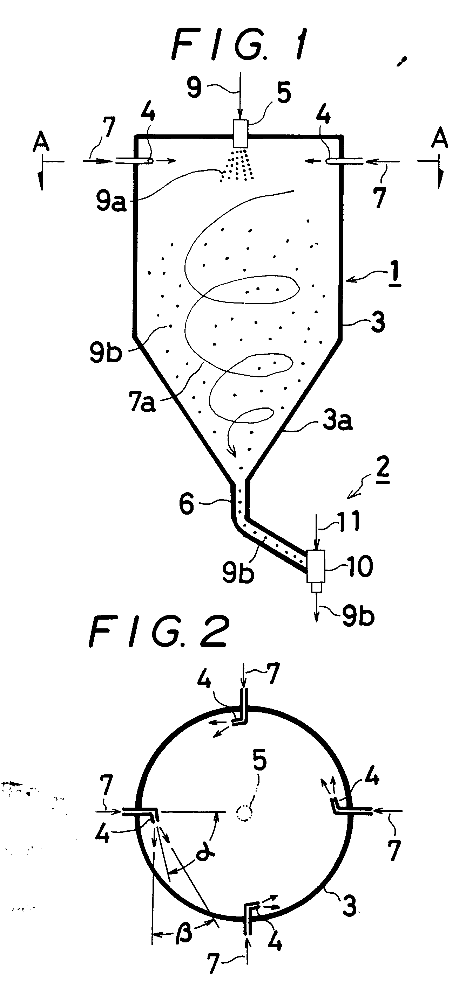

As illustrated in Figs. 1 and 2, an apparatus for producing frozen particles 1 comprises a plurality of refrigerant atomizers 4 and a material atomizer 5 which extend into an airtight adiabatic vessel 3. The refrigerant atomizers 4 can spray a refrigerant 7, such as liquified nitrogen, while the material atomizer 5 can spray a material 9 to be frozen that is selected according to each application.

The vessel 3 is circular in lateral cross-section and the lower portion 3a is gradually constructed in the downward direction to form a conical section 3a having a circular lateral conical shape. The conical section 3a communicates with a frozen particle outlet 6 which also serves as a gas outlet. The vessel 3 may have any appropriate configuration and construction, and the dimensions of the vessel 3 depends on the diameter of a frozen particle to be produced and total volume of frozen particles to be produced. In the present embodiment, the diameter of the objective frozen particle is approximately 100 µm, therefore a vessel 3 having a height of 550 mm and internal diameter of 300 mm is used. The aforesaid frozen particle outlet 6 is selected to have a diameter of approximately 10 mm, with which the resulting internal pressure of the vessel 3 at the time of producing frozen particles increases approximately to 0.2 kg/cm²G.

The refrigerant atomizers are mounted at upper portions of the vessel 3 with the nozzles thereof directed generally along the circumference of the internal surface of the vessel 3 to spray a refrigerant 7. In the present embodiment, four refrigerant atomizers 4 are located in a lateral or radial plane and spaced at intervals of 90° along the inside of the upper portion of the vessel 3. Although the present embodiment comprises four refrigerant atomizers 4 in a radial plane, at least two refrigerant atomizers 4 may be arranged in such a plane. Although the refrigerant atomizers 4 are arranged in a common plane in the present embodiment, the refrigerant atomizers 4 may be grouped in two or more radial planes if needed as shown in Fig. 3.

The mounting angle α of each of the atomizers 4 should be adjusted in accordance with the spraying angle β of the refrigerant 7 so that neither the refrigerant 7 nor cooled gas is applied directly to the material atomizer 5. If a direct contact between the refrigerant 7 or cool gas and the atomizer 5 takes place, freezing of the material atomizer 5 may occur, or a lump of a frozen material may be produced around the ceiling section or the atomizer 5 due to possible blowing of the sprayed material particles 9a to be frozen in an upward direction, and following which a lump of frozen material may fall down to clog the outlet 6.

The spout pressure of the refrigerant 7 from each of the atomizers 4 is determined according to the internal pressure of the vessel 3; for instance, the pressure is set at 1.0 to 1.5 kg/cm²G in the present embodiment.

The refrigerant 7 issuing in a circumferential direction from each of the atomizers 4 is vaporized after leaving the spout to maintain the internal condition of the vessel 3 in a cool gaseous phase as it gradually descends in a swirling motion along the cylindrical inner wall of the vessel 3, and then is discharged from the vessel 3 through the outlet 6.

The amount of the refrigerant issuing from each of the atomizers 4 is controlled by a temperature sensor (not shown), by means of which the temperature inside the vessel 3 is maintained at approximately -110°C or lower.

The material atomizer 5 is mounted at the centre of the ceiling section of the vessel 3 and is arranged to spray the material 9 to be frozen in a downward direction. The spout pressure of the material 9 to be frozen is set to such a value that the spout pressure is not influenced by the internal pressure of the vessel 3; for instance, the pressure is set at 8 kg/cm²G in the present embodiment.

The particles 9a of the material 9 to be frozen are sprayed from the material atomizer 5 and are frozen through thermal exchange with the refrigerant gas 7a, where the gas 7a and the particles 9a come into contact with each other. By virtue of the swirling movement of the gas there is a long contact time between the gas 7a and particles 9a. As a consequence the sprayed particles 9a are effectively frozen to obtain frozen particles 9b having an excellent quality.

The produced frozen particles 9b move in the stream of the refrigerant gas 7a in swirling movement along the cylindrical inner wall of the vessel 3 and are transferred toward the outlet 6. By virtue of the above-mentioned particle movement, there is little or no possibility that the frozen particles 9b remain in the conical section 3a of the vessel 3, and the frozen particles are transferred toward the outlet 6 in a sufficiently stabilized condition.

In the above-mentioned embodiment, the frozen particles 9b transferred to the outlet 6 are ejected out of the vessel 3 by means of a frozen particle ejecting unit 2.

As illustrated in Fig. 1, the frozen particle ejecting unit 2 comprises a spray gun 10 connected to the outlet 6 and a means for supplying a drive gas 11 such as nitrogen gas. The unit 2 operates to provide an ejector effect in the spray gun 10 by means of the drive gas 11, with which the frozen particles 9b and the refrigerant gas 7a ejected through the outlet 6 are driven out of the vessel 3 through the spray gun 10.

## Claims

1. An apparatus for producing frozen particles comprising:
an airtight adiabatic vessel having at a lower portion thereof a frozen particle outlet which can also serve as a gas outlet;
a material atomizer for spraying downward a material to be frozen in said vessel; and,
a plurality of refrigerant atomizers arranged at regular intervals around an annular area surrounding the spray area of said material atomizer at upper portions inside of said vessel, each refrigerant atomizer being arranged to spray a refrigerant in a generally circumferential direction around the interior wall of the vessel.

2. An apparatus according to claim 1, wherein the refrigerant is liquid nitrogen.

3. An apparatus as claimed in claim 1 or claim 2, wherein said plural refrigerant atomizers are arranged in a plurality of lateral or radial planes of said vessel.

## Patentansprüche

1. Vorrichtung für die Herstellung gefrorener Partikel mit:
einem luftdicht geschlossenen, unter adiabatischem Druck stehenden Kessel, der in seinem unteren Bereich einen Auslaß für gefrorene Partikel aufweist, der auch als Gasauslaß verwendbar ist;
einem Materialzerstäuber, um zu gefrierendes Material im Kessel nach unten zu sprühen und
einer Mehrzahl von Gefriermittelzerstäubern, die in regelmäßigen Abständen in einem Ringbereich angeordnet sind und den Sprühbereich des Materialzerstäubers in dessen oberem Bereich innerhalb des Kessels umgeben, wobei jeder Gefriermittelzerstäuber so angeordnet ist, daß er Gefriermittel im wesentlichen in Umfangsrichtung an der Innenseite der Kesselwand entlang sprüht.

2. Vorrichtung nach Anspruch 1, wobei das Gefriermittel flüssiger Stickstoff ist.

3. Vorrichtung wie in Anspruch 1 oder Anspruch 2 beansprucht, wobei die Mehrzahl der Gefriermittelzerstäuber in einer Mehrzahl von Umfangs- oder Radial-Ebenen des Kessels angeordnet sind.

## Revendications

1. Appareil de fabrication de particules congelées comprenant :
- un récipient adiabatique hermétique ayant, à une de ses parties inférieures, une sortie de particules congelées qui peut également servir comme sortie de gaz ;
- un atomiseur de matière pour pulvériser vers le bas une matière à congeler dans ledit récipient ; et
- un ensemble d'atomiseurs réfrigérants disposés à intervalles réguliers autour d'une surface annulaire entourant la surface de pulvérisation dudit atomiseur de matière au niveau de parties supérieures internes dudit récipient, chaque atomiseur réfrigérant étant disposé de façon à pulvériser un réfrigérant dans une direction généralement circonférentielle autour de la paroi interne du récipient.

2. Appareil selon la revendication 1, dans lequel le réfrigérant est l'azote liquide.

3. Appareil selon la revendication 1 ou revendication 2, dans lequel ledit ensemble d'atomiseurs réfrigérants est disposé dans un ensemble de plans radiaux ou latéraux dudit récipient.
